# EUROPÄISCHE PATENTANMELDUNG

(11) **EP 3 514 905 A1**
(43) Veröffentlichungstag der Anmeldung: **24.07.2019**
(21) Anmeldenummer: 18152324.2
(22) Anmeldetag: 18.01.2018
(51) Int. Cl.: H02H 3/14, G01R 31/02, H02H 5/10, H02H 3/33, H02H 9/08, H02H 1/04

(54) **BAUSTROMVERTEILER MIT FEHLERSTROM-SCHUTZEINRICHTUNG, SCHUTZLEITER-ÜBERWACHUNG UND ABLEITSTROM-KOMPENSATION**

(71) Anmelder: EURODIMA GmbH & Co KG, 5073 Wals-Himmelreich (AT)
(72) Erfinder: Siegl, Herbert, 5760 Saalfelden (AT)
(74) Vertreter: Schwarz & Partner Patentanwälte OG

(57) **Zusammenfassung**

Die Erfindung betrifft einen Baustromverteiler, umfassend zumindest eine Einspeisung, zumindest einen Ausgang und zumindest eine elektrische Schaltung, gekennzeichnet durch eine Fehlerstrom-Schutzeinrichtung (2), eine Schutzleiterüberwachung (3) und eine Ableitstrom-Kompensation (4), wobei diese verbunden sind. Weiters betrifft die Erfindung die Verwendung eines solchen Baustromverteilers zum Betreiben von frequenzgesteuerten elektrischen Betriebsmitteln insbesondere auf Baustellen, wobei die Sicherheit von Personen im Umgang mit elektrischen Betriebsmitteln unter Einhaltung der Vorschriften erhöht wird.

## Beschreibung

Die Erfindung betrifft einen Baustromverteiler, umfassend zumindest eine Einspeisung, zumindest einen Ausgang und zumindest eine elektrische Schaltung. Außerdem betrifft die Erfindung die Verwendung eines solchen Baustromverteilers.

### HINTERGRUND DER ERFINDUNG

Im Baustellenbetrieb ist die Verwendung von elektrischen Betriebsmitteln meist unabdinglich. Um die Versorgung dieser Geräte mit Einphasen- bzw. Dreiphasenwechselstrom aus einer einzigen Stromquelle zu gewährleisten, kommen sogenannte Baustromverteiler zum Einsatz.

Ein großer Teil der Betriebsmittel sind Schaltfrequenz-gesteuert. So ist beispielsweise die Motordrehzahl von Kränen, Wandsägen, Bohrmotoren, Betonpumpen, Mischmaschinen oder die Rüttelfrequenz von Betonrüttlern von der Schaltfrequenz abhängig, die Änderung der Schaltfrequenz wird dabei beispielsweise durch Frequenzumrichter realisiert.

Im Fehlerfall erzeugen Geräte wie Frequenzumrichter, Wechselrichter, Schaltnetzteile, etc. neben den 50 Hz-Wechsel- und Pulsgleichfehlerströmen auch glatte Gleichfehlerströme mit Mischfrequenzen - bei Frequenzumrichtern zum Beispiel die Schaltfrequenz (2-16 kHz) und Oberschwingungen (bis 100 kHz) zuzüglich der Ausgangsfrequenz. Fehlerstrom-Schutzeinrichtungen mit entsprechender Selektivität und Störfestigkeit sind dann vorschriftsgemäß einzusetzen, um einen umfassenden Personenschutz zu gewährleisten.

Wenngleich in Niederspannungsnetzen vermehrt Fehlerstrom-Schutzeinrichtungen des Typs B bzw. B+ nach Norm DIN EN 62423 zum Einsatz kommen, sind nach wie vor Fehlerstrom-Schutzeinrichtungen des Typs A nach Norm DIN EN 61008-1 stark verbreitet.

Zum Schutz von am Baustellenbetrieb beteiligten Personen bei direktem oder indirektem Berühren von Starkstromanlagen schreibt DIN EN 50178 gemäß Absatz 5.2.11.2 und 5.3.2.3 vor, sogenannte Fehlerstrom-Schutzeinrichtungen (Residual Current Device, RCD) des Typs B bzw. allstromsensitive RCDs einzusetzen.

Aufgrund einschlägiger Produktnormen dürfen RCDs des Typs A, unabhängig von Ihrem Bemessungsfehlerstrom, im Fehlerfall nur mit maximal I_{DC} = 6 mA beaufschlagt werden. Herkömmliche Fehlerstrom-Schutzeinrichtungen des Typs B oder B₊ dürfen daher einem RCD des Typs A nicht nachgeschaltet werden.

Dies führt im Allgemeinen dazu, dass im Baustellenbetrieb Betriebsmittel unter Nichteinhaltung der Vorschriften zum Einsatz kommen. Konkret werden Typ A-gesicherte Stromkreise für die Versorgung der Betriebsmittel herangezogen, oder es wird einem Typ A-gesicherten Stromkreis vorschriftswidrig ein Baustromverteiler mit herkömmlicher Typ B bzw. einer allstromsensitiven Fehlerstrom-Schutzeinrichtung nachgeschaltet, um weitere elektrische Ausgänge für zusätzliche Betriebsmittel zu gewinnen.

Bei bestimmungsgemäßer Verwendung mehrerer an eine Versorgungsquelle angeschlossener Betriebsmittel oder bei Unterbrechung des Schutzleiters können dauerhaft Ableitströme höher als I_{AC} = 3,5 mA oder I_{DC} = 10 mA fließen. Dementsprechend sind laut DIN EN50178 gemäß Absatz 5.2.11.1 und 5.3.2.1 Maßnahmen zu treffen, um hinreichenden Personenschutz zu gewährleisten. Ebenso können betriebsbedingte und für Personen unbedenkliche Ableitströme den vorgeschriebenen Fehlerstrom-Schutzschalter ungewollt zum Auslösen bringen. Ein zuverlässiger Betrieb auf Baustellen ist somit nicht mehr gewährleistet.

### STAND DER TECHNIK

Im Stand der Technik sind Baustromverteiler beschrieben, welche dargelegte Aufgaben nicht zufriedenstellend lösen. So offenbart DE 93 16 699 U1 einen Baustromverteiler mit außenliegenden Streckdosen und beschreibt den allgemeinen Stand der Technik. Die EP 2 945 240 A1 offenbart eine Stromverteilervorrichtung mit Schutzleiter-Überwachungseinrichtung. Dokument DE 10 2012 102 742 A1 beschreibt einen Baustromverteiler mit nicht genau spezifizierten Fehlerstrom-Schutzschaltern.

### KURZE BESCHREIBUNG DER ERFINDUNG

Aufgabe der vorliegenden Erfindung ist es, einen Sicherheits-Baustromverteiler in kompakter Weise bereitzustellen, mit dem Ziel, die Einhaltung der Sicherheits-Vorschriften von am Baustellenbetrieb beteiligten Personen zu erleichtern und dadurch die Gefahr von Stromunfällen auf Baustellen, unter Gewährleistung einer zuverlässigen Benützung von Betriebsmitteln, zu reduzieren. Diese Aufgabe wird gelöst durch einen Baustromverteiler, umfassend zumindest eine Einspeisung, zumindest einen Ausgang und zumindest eine elektrische Schaltung, wobei eine Fehlerstrom-Schutzeinrichtung, eine Schutzleiter-Überwachung und eine Ableitstrom-Kompensation verbunden bzw. durchgeführt sind.

Eine bevorzugte Ausführungsvariante sieht vor, dass die Fehlerstrom-Schutzeinrichtung ein Fehlerstrom-Schutzschalter des Typs B aufweist. Besonders bevorzugt ist die Verwendung eines Fehlerstrom-Schutzschalters vom Typ B mit einer Auslöseschwelle von 6 mA DC.

Die Einspeisung, der Fehlerstrom-Schutzschalter und die Ableitstrom-Kompensation sind mit einem Ausgang in Serie geschaltet, wobei zwischen Fehlerstrom-Schutzschalter und Ableitstrom-Kompensation eine Schutzleiter-Überwachung abgezweigt ist. Die Gleichspannungsversorgung der Ableitstrom-Kompensation wird durch ein Netzteil, vorzugsweise durch ein Schaltnetzteil, bereitgestellt, wobei ein Eingang des Schaltnetzteils mit einer Abzweigung vom Neutralleiter elektrisch verbunden ist und ein weiterer Eingang mit einer Abzweigung von einem Phasenleiter elektrisch verbunden ist, wobei die Ableitstrom-Kompensation mit dem zumindest einen Ausgang elektrisch verbunden ist.

Ein erfindungsgemäßer Sicherheits-Baustromverteiler wird zum Betreiben von elektrischen Betriebsmitteln insbesondere auf Baustellen verwendet, wobei die erfindungsgemäße Vorrichtung als Schutzeinrichtung für ein die Betriebsmittel mit elektrischer Energie versorgendes Stromnetz fungiert. Der Baustromverteiler kann Fehlerstrom-Schutzeinrichtungen aller Art nachgeschaltet werden. Ebenso kann die erfindungsgemäße Vorrichtung an ein ungesichertes Stromnetz angeschlossen werden.

### KURZE BESCHREIBUNG DER ZEICHNUNGEN

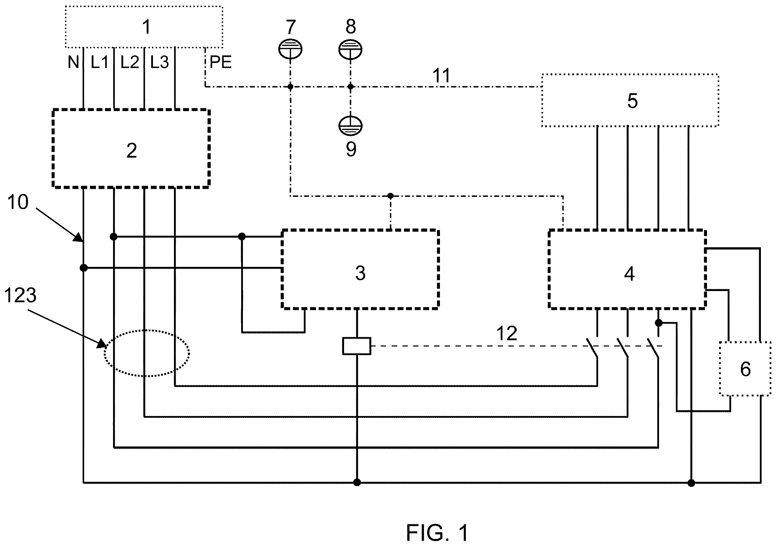

**Fig. 1** zeigt ein Blockdiagramm eines erfindungsgemäßen Sicherheits-Baustromverteilers mit einer Einspeisung **1**, einem Fehlerstrom-Schutzschalter **2** des Typs B in spezieller Ausführung, einer Schutzleiterüberwachung **3**, einer Ableitstrom-Kompensation **4**, zumindest einem Ausgang **5**, einem Schaltnetzteil **6** für die Spannungsversorgung der Ableitstrom-Kompensation **4**, einem geerdeten Gehäuse **7**, einem geerdeten Deckel **8**, einem geerdeten externen Anschlusspunkt **9**, einem Neutralleiter (N) **10**, einem Schutzleiter (PE) **11**, einem elektromagnetischen- bzw. elektromechanischen Schalter (EMS) **12** und drei Phasenleitern (L1, L2, L3) **123**, umfassend einen ersten Phasenleiter **L1**, einen zweiten Phasenleiter **L2**, und einen dritten Phasenleiter **L3.**

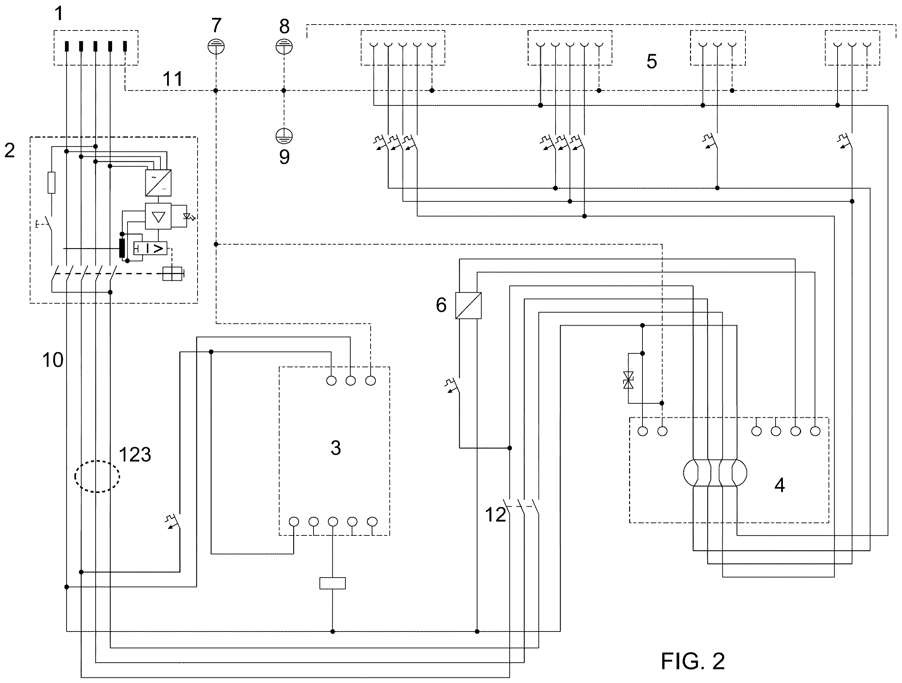

**Fig. 2** zeigt einen detaillierten Stromlaufplan der elektrischen Schaltung eines erfindungsgemäßen Sicherheits-Baustromverteilers.

### DETAILLIERTE BESCHREIBUNG DER ERFINDUNG

Unter einem Baustromverteiler ist eine Vorrichtung zu verstehen, die dazu dient, zumindest einem Betriebsmittel elektrische Energie zuzuführen, wobei der Stromverteiler mit zumindest einem aus einer Versorgungsquelle führenden Phasenleiter 123 einem Neutralleiter 10 und einem Schutzleiter 11 verbunden ist. Ferner weist ein Baustromverteiler neben meist einer Einspeisung 1 mehrere Ausgänge 5 auf. Ein solcher Stromverteiler dient außerdem dazu, einen elektrischen Kontakt zwischen dem in den Stromverteiler einzuspeisenden Schutzleiter 11 mit dem Schutzleiter des an einem der Ausgänge 5 angeschlossenen Betriebsmittels herzustellen. Ein erfindungsgemäßer Baustromverteiler erfüllt die Aufgabe, nicht normgerechte elektrische Absicherung in Stromnetzen dahingehend zu erweitern, sodass im Fehlerfall ein hinreichender Personenschutz gewährleistet ist. Ein solcher Baustromverteiler kann ortsfest oder ortveränderlich ausgebildet sein.

In einer bevorzugten Ausführungsvariante ist die elektrische Schaltung in einem Gehäuse 7 mit Deckel 8 untergebracht. Die Einspeisung 1 weist einen 5-poligen CEE32-Drehstromstecker für Netzspannungen von 400 V AC und Stromstärken von 32 A auf. Die fünf Pole werden aus Neutralleiter 10, drei Phasenleitern 123 und einem Schutzleiter 11 gebildet. Weiters sind vier Ausgänge 5 vorgesehen, wobei ein Ausgang eine CEE32-Drehstromsteckdose für Ausgansspannungen von 400 V AC und Stromstärken von 32 A aufweist, wobei ein weiterer Ausgang eine CEE16-Drehstromsteckdose für Ausgangsspannungen von 400 V AC und Stromstärken von 16 A aufweist, wobei zwei weitere Ausgänge eine Schutzkontakt-Streckdose für Ausgangsspannungen von 230 V AC und Stromstärken von 16 A aufweisen.

Die Fehlerstrom-Schutzeinrichtung 2 weist einen Fehlerstrom-Schutzschalter (Residual Current operated Circuit-Breaker, RCCB) vom Typ B SK MI auf, vorzugsweise ausgelegt für einen Nennstrom von 40 A mit einem Bemessungsfehlerstrom von 30 mA und einem maximalen Gleichstromanteil von 6 mA. Die Schutzleiter-Überwachung 3 ist vorzugweise für Betriebsspannungen von 200-230 V AC bei einer Frequenz von 50/60 Hz ausgelegt. Die Ableitstrom-Kompensation 4 ist bevorzugt für Kompensationsströme bis 300 mA ausgelegt, wobei Frequenzen zwischen 150 Hz und 1050 Hz kompensiert werden. Die Versorgungsspannung einer solchen Ableitstrom-Kompensation liegt bei 24 V AC / DC.

In einem erfindungsgemäßen Sicherheits-Baustromverteiler wird nach Fig. 1 (und Fig. 2) der Neutralleiter 10 und die drei Phasenleiter 123 mit dem Fehlerstrom-Schutzschalter 2 elektrisch verbunden und der Schutzleiter mit dem Gehäuse 7, Deckel 8, einem externen Anschlusspunkt 9, mit jedem der Ausgänge 5, mit den entsprechenden Anschlüssen der Schutzleiter-Überwachung 3 sowie mit der Arbeitsstrom-Kompensation 4 elektrisch verbunden. Die Ausgänge des Fehlerstrom-Schutzschalters 2, also die Ausgänge für Neutralleiter 10 und Phasenleiter 123, werden mit der Ableitstrom-Kompensation 4 elektrisch verbunden, wobei dem Fehlerstrom-Schutzschalter 2 und der Ableitstrom-Kompensation 4 ein EMS 12, bevorzugt ein Schaltschütz, zwischengeschaltet ist. Dieser EMS 12 wird dabei von der Schutzleiter-Überwachung 3 gesteuert, wobei im Fehlerfall die Phasenleiter 123 unterbrochen werden. Die Schutzleiter-Überwachung 3 ist dabei mit den vom Fehlerstrom-Schutzschalter 2 kommenden Phasenleitern L1 über Abzweigungen elektrisch verbunden, wobei die abgezweigte Leitung mit einer in Serie geschalteten Sicherung gesichert ist. Ein Ausgang der Schutzleiter-Überwachung 3 ist abzweigend mit dem Neutralleiter 10 elektrisch verbunden, wobei die Spule des EMS 12 in Serie geschaltet ist.

Die Gleichspannungsversorgung für die Ableitstrom-Kompensation 4 wird bevorzugt durch ein Schaltnetzteil 6 realisiert, wobei ein Eingang mit einer Abzweigung vom Neutralleiter 10 elektrisch verbunden ist und ein weiterer Eingang mit einer Abzweigung eines Phasenleiters L1 elektrisch verbunden ist und das Schaltnetzteil über seine Ausgänge mit den entsprechenden Eingängen der Ableitstrom-Kompensation verbunden ist. Die Ausgänge der Ableitstrom-Kompensation 4 sind durch Neutralleiter 10 bzw. Phasenleiter 123 mit in Serie geschalteten Sicherungen mit den Ausgängen 5 entsprechend elektrisch verbunden.

## Patentansprüche

1. Baustromverteiler, umfassend zumindest eine Einspeisung (1), zumindest einen Ausgang (5) und zumindest eine elektrische Schaltung, **gekennzeichnet durch** eine Fehlerstrom-Schutzeinrichtung (2), eine Schutzleiter-Überwachung (3) und eine Ableitstrom-Kompensation (4), wobei diese verbunden sind.

2. Baumstromverteiler nach Anspruch 1, **dadurch gekennzeichnet, dass** die Fehlerstrom-Schutzeinrichtung (2) einen Fehlerstrom-Schutzschalter des Typs B aufweist.

3. Baustromverteiler nach Anspruch 1 und 2, **dadurch gekennzeichnet, dass** der Fehlerstrom-Schutzschalter (2) des Typs B zusätzlich eine Auslöseschwelle von 6 mA DC aufweist.

4. Baustromverteiler nach Anspruch 1 bis 3, **dadurch gekennzeichnet, dass** die Einspeisung (1), der Fehlerstrom-Schutzschalter (2) und die Ableitstrom-Kompensation (4) in Serie geschaltet sind, wobei zwischen Fehlerstrom-Schutzschalter (2) und Ableitstrom-Kompensation (4) eine Schutzleiter-Überwachung (3) abgezweigt ist.

5. Baustromverteiler nach Anspruch 1 bis 4, **dadurch gekennzeichnet, dass** die Gleichstromversorgung der Ableitstrom-Kompensation (4) durch ein Schaltnetzteil (6) bereitgestellt wird.

6. Baumstromverteiler nach Anspruch 1 bis 5, **dadurch gekennzeichnet, dass** ein Eingang des Netzteils (6) mit einer Abzweigung vom Neutralleiter (10) elektrisch leitend verbunden ist und ein weitere Eingang mit einer Abzweigung von einem Phasenleiter (L1) elektrisch leitend verbunden ist.

7. Baustromverteiler nach Anspruch 1 bis 6, **dadurch gekennzeichnet, dass** die Ableitstrom-Kompensation (4) mit dem zumindest einen Ausgang (5) verbunden ist.

8. Verwendung eines Baustromverteilers nach Anspruch 1 bis 7 zum Betreiben von elektrischen Betriebsmitteln insbesondere auf Baustellen.
